(19) Europäisches Patentamt / European Patent Office / Office européen des brevets

(11) **EP 4 033 193 B1**

(12) **FASCICULE DE BREVET EUROPEEN**

(45) Date de publication et mention
de la délivrance du brevet:
**09.04.2025 Bulletin 2025/15**

(51) Classification Internationale des Brevets (IPC):
*F28F 13/08* (2006.01)     *B33Y 80/00* (2015.01)
*F28F 7/02* (2006.01)     *F28F 9/02* (2006.01)

(21) Numéro de dépôt: **22152808.6**

(22) Date de dépôt: **21.01.2022**

(52) Classification Coopérative des Brevets (CPC):
**F28F 7/02; B33Y 80/00; F28F 9/02; F28F 13/08;**
F28F 2210/02; F28F 2250/106; F28F 2255/00

(54) **ECHANGEUR THERMIQUE COMPRENANT UN CORPS D ECHANGEUR EN GYROÏDE**

WÄRMETAUSCHER MIT EINEM AUS EINEM GYROIDEN BESTEHENDEN AUSTAUSCHKÖRPER

HEAT EXCHANGER COMPRISING A GYROID HEAT EXCHANGER BODY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.01.2021 FR 2100603**

(43) Date de publication de la demande:
**27.07.2022 Bulletin 2022/30**

(73) Titulaire: **Nexson Group - Industry
58600 Garchizy (FR)**

(72) Inventeur: **Bonnafous, Charles
58600 VARENNES VAUZELLES (FR)**

(74) Mandataire: **Regimbeau
20, rue de Chazelles
75847 Paris Cedex 17 (FR)**

(56) Documents cités:
**EP-A1- 0 454 550     US-A1- 2017 089 643
US-A1- 2018 187 984     US-A1- 2018 306 516
US-A1- 2020 033 070     US-A1- 2020 363 133
US-B2- 10 704 841**

- **JOSHUAH K STOLAROFF: "High-efficiency,
integrated reactors for sorbents, solvents, and
membranes using additive manufacturing", 13
August 2018 (2018-08-13), XP055749802,
Retrieved from the Internet <URL:https://netl.
doe.gov/sites/default/files/netl-file/
J-Stolaroff-LLNL-Reactor-Additive-Manufactur
ing.pdf> [retrieved on 20201112]**

## Description

### DOMAINE DE L'INVENTION

L'invention concerne un échangeur thermique et un ensemble d'échangeur thermique associé.

### ETAT DE LA TECHNIQUE

Les échangeurs thermiques ont pour fonction de mettre en œuvre un échange de chaleur entre plusieurs fluides sans pour autant les mélanger.

Les échangeurs thermiques peuvent comprendre une partie interne comprenant un corps formant deux circuits séparés de circulation de fluide, et une partie externe comprenant un bâti et des collecteurs fixés sur le bâti. Ces collecteurs sont reliés d'une part à des conduits permettant d'amener les fluides vers la partie interne de l'échangeur et d'autre part à des conduits permettant d'évacuer les fluides depuis la partie interne de l'échangeur une fois que ceux-ci ont circulé dans l'échangeur.

Dans ces échangeurs, un fluide chaud et un fluide froid circulent respectivement dans les deux circuits séparés de circulation formés par le corps. Pendant leur circulation, un transfert de chaleur se produit du fluide chaud vers le fluide froid, à travers le corps.

Le document US 2018/306516 A1 divulgue un échangeur de chaleur pour un moteur d'avion, comprenant deux entrées et deux sorties correspondant à deux réseaux de canaux qui s'entremêlent au moins sur une partie de leur longueur.

Le document US 2020/033070 A1 porte sur un échangeur de chaleur comprenant deux entrées et deux sorties ainsi qu'une structure de surface minimale qui sépare deux volumes dans le corps de l'échangeur, les deux volumes communiquant respectivement avec les premières entrée et sortie et avec les deuxièmes entrée et sortie.

Dans certaines applications, l'un des deux fluides peut subir un changement d'état pendant qu'il circule dans l'échangeur. Par exemple, le fluide froid peut être à l'état liquide lorsqu'il pénètre dans le corps de l'échangeur et en se réchauffant, le fluide froid peut se vaporiser partiellement ou totalement. A l'inverse, le fluide chaud peut être à l'état gazeux lorsqu'il pénètre dans l'échangeur et en se refroidissant, le fluide chaud peut se liquéfier partiellement ou totalement.

Cependant, un tel changement d'état provoque une augmentation ou une diminution importante du volume et de la pression du fluide circulant dans l'échangeur. L'augmentation (ou la diminution) du volume du fluide a pour effet de générer des accélérations (ou des décélérations) du fluide dans l'échangeur, et par conséquent des pertes de charge. De plus, l'augmentation (ou la diminution) de la pression du fluide a pour effet de créer des contraintes mécaniques importantes sur les composants de l'échangeur, de sorte que les composants doivent être conçus pour résister à ces contraintes.

### EXPOSE DE L'INVENTION

Un but de l'invention est de proposer un échangeur thermique présentant une surface d'échange importante entre les deux fluides tout en étant compact.

Un autre but de l'invention est de proposer un échangeur thermique qui soit adapté au traitement de fluides susceptibles de subir un changement d'état total ou partiel pendant leur circulation dans l'échangeur.

A cet effet, l'invention propose un échangeur thermique comprenant un corps d'échangeur délimité par une première surface d'entrée, une première surface de sortie, une deuxième surface d'entrée et une deuxième surface de sortie, dans lequel le corps d'échangeur comprend une paroi séparatrice en forme de gyroïde séparant un premier réseau de canaux pour la circulation d'un premier fluide depuis la première surface d'entrée jusqu'à la première surface de sortie, et un deuxième réseau de canaux pour la circulation d'un deuxième fluide depuis la deuxième surface d'entrée jusqu'à la deuxième surface de sortie.

De plus, le premier réseau de canaux comprend des premiers canaux ayant une section transversale qui varie en augmentant continûment depuis la première surface d'entrée jusqu'à la première surface de sortie, et le deuxième réseau de canaux comprend des deuxièmes canaux ayant une section transversale qui varie en diminuant continûment depuis la deuxième surface d'entrée jusqu'à la deuxième surface de sortie.

La forme en gyroïde de la paroi séparatrice permet de maximiser les échanges de chaleur entre le premier fluide circulant dans le premier réseau de canaux et le deuxième fluide circulant dans le deuxième réseau de canaux, tout en occupant un volume minimal.

En outre, la forme courbe des canaux permet de limiter les pertes de charge des flux de fluide circulant à l'intérieur du corps d'échangeur.

La section des canaux présente une forme circulaire, ce qui permet au corps d'échangeur de résister à une pression élevée des fluides circulant dans le corps d'échangeur.

De plus, la variation progressive de la section des premiers canaux depuis la première surface d'entrée jusqu'à la première surface de sortie, et la variation progressive de la section des deuxièmes canaux depuis la première surface d'entrée jusqu'à la première surface de sortie, permet au premier fluide de se dilater au cours de sa circulation à travers le corps d'échangeur, et au deuxième fluide de se rétracter au cours de sa circulation à travers le corps d'échangeur. Cela évite de générer des variations trop importantes de la vitesse des fluides et/ou de la pression des fluides à l'intérieur de l'échangeur.

En particulier, le corps de l'échangeur thermique peut être conçu de manière à autoriser un changement d'état total ou partiel du premier fluide au cours de sa circulation dans l'échangeur thermique.

L'échangeur thermique proposé peut en outre présenter l'une ou plusieurs des caractéristiques suivantes :

- Le corps d'échangeur comprend une première paroi d'entrée autorisant une pénétration du premier fluide à travers la première surface d'entrée dans le premier réseau de canaux, et interdisant une pénétration du premier fluide à travers la première surface d'entrée dans le deuxième réseau de canaux.
- L'échangeur thermique comprend un premier collecteur d'entrée pour amener le premier fluide jusqu'à la première paroi d'entrée.
- Le corps d'échangeur comprend une première paroi de sortie autorisant une extraction du premier fluide à travers la première surface de sortie hors du premier réseau de canaux, et interdisant une extraction du deuxième fluide à travers la première surface de sortie hors du deuxième réseau de canaux.
- L'échangeur thermique comprend un premier collecteur de sortie pour extraire le premier fluide à travers la première paroi de sortie.
- Le corps d'échangeur comprend une deuxième paroi d'entrée autorisant une pénétration du deuxième fluide à travers la deuxième surface d'entrée dans le deuxième réseau de canaux, et interdisant une pénétration du deuxième fluide à travers la deuxième surface d'entrée dans le deuxième réseau de canaux.
- L'échangeur comprend un deuxième collecteur d'entrée pour amener le deuxième fluide à travers la deuxième paroi d'entrée.
- Le corps d'échangeur comprend une deuxième paroi de sortie autorisant une extraction du deuxième fluide à travers la deuxième surface de sortie hors du deuxième réseau de canaux, et interdisant une extraction du premier fluide à travers la deuxième surface de sortie hors du premier réseau de canaux.
- L'échangeur comprend un deuxième collecteur de sortie pour extraire le deuxième fluide à travers la deuxième paroi de sortie.

L'invention concerne en outre un ensemble d'échangeur thermique comprenant une pluralité d'échangeurs thermiques tels que définis précédemment, incluant un premier échangeur thermique et un deuxième échangeur thermique, dans lequel la première surface de sortie du premier échangeur thermique est raccordée à la première surface d'entrée du deuxième échangeur thermique de sorte que le premier fluide circule successivement à travers le premier échangeur thermique et à travers le deuxième échangeur thermique, et dans lequel la deuxième surface de sortie du deuxième échangeur thermique est raccordée à la deuxième surface d'entrée du premier échangeur thermique de sorte que le deuxième fluide circule successivement à travers le deuxième échangeur thermique et à travers le premier échangeur thermique.

## DESCRIPTION DES FIGURES

D'autres caractéristiques et avantages ressortiront encore de la description qui suit, laquelle est purement illustrative te non limitative te doit être lue en regard des dessins annexés, parmi lesquels :

- la figure 1 représente de manière schématique un échangeur thermique conforme à un premier mode de réalisation de l'invention,
- la figure 2 représente de manière schématique, en vue en coupe selon un plan XZ, un corps d'échangeur de l'échangeur thermique de la figure 1, selon un premier exemple,
- la figure 3 représente de manière schématique, en vue en coupe selon un plan XY, le corps d'échangeur de l'échangeur thermique de la figure 1, selon le premier exemple,
- la figure 4 représente de manière schématique, en vue en coupe selon un plan YZ, le corps d'échangeur de l'échangeur thermique de la figure 1, selon le premier exemple,
- la figure 5 représente de manière schématique, en vue en coupe selon un plan XZ, un corps d'échangeur de l'échangeur thermique de la figure 1, selon un deuxième exemple,
- la figure 6 représente de manière schématique, en vue en coupe selon un plan XY, le corps d'échangeur de l'échangeur thermique de la figure 1, selon le deuxième exemple,

- la figure 7 représente de manière schématique, en vue en coupe selon un plan YZ, le corps d'échangeur de l'échangeur thermique de la figure 1, selon le deuxième exemple,
- la figure 8 représente de manière schématique, en vue en coupe selon un plan XZ, un corps d'échangeur de l'échangeur thermique de la figure 1, selon un troisième exemple,
- la figure 9 représente de manière schématique, en vue en coupe selon un plan XY, le corps d'échangeur de l'échangeur thermique de la figure 1, selon le troisième exemple,
- la figure 10 représente de manière schématique, en vue en coupe selon un plan YZ, le corps d'échangeur de l'échangeur thermique de la figure 1, selon le troisième exemple,
- la figure 11 représente un ensemble d'échangeur thermique comprenant une pluralité d'échangeurs thermiques conformes à l'échangeur thermique de la figure 1,
- la figure 12 représente une variante de l'ensemble d'échangeur thermique de la figure 11,
- la figure 13 représente de manière schématique un échangeur thermique conforme à un deuxième mode de réalisation de l'invention,
- la figure 14 représente de manière schématique, en vue en coupe, l'échangeur thermique de la figure 13,
- la figure 15 représente un ensemble d'échangeur thermique comprenant une pluralité d'échangeurs thermiques conformes à l'échangeur thermique de la figure 13,
- la figure 16 représente une variante de l'ensemble d'échangeur thermique de la figure 15.

## DESCRIPTION DETAILLEE DE L'INVENTION

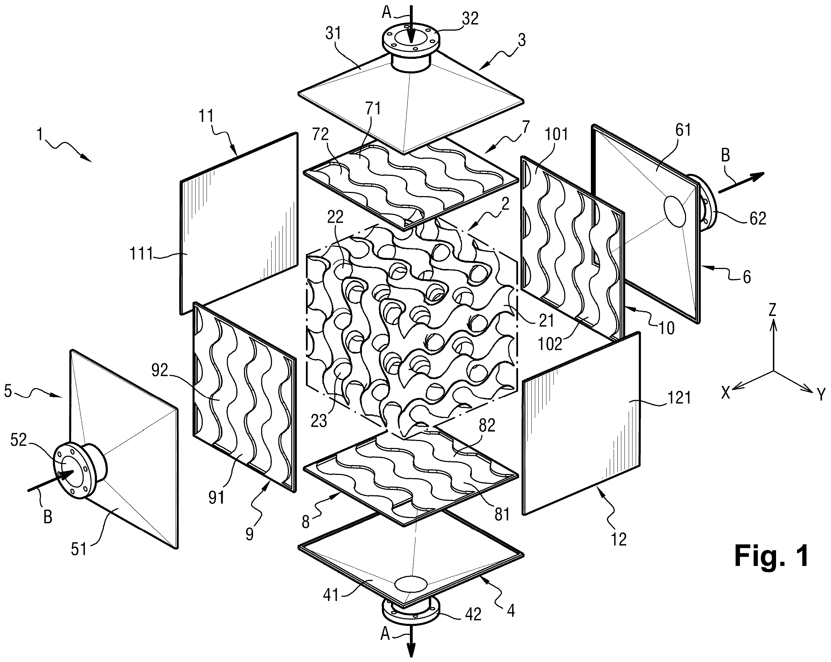

Sur la figure 1, l'échangeur thermique 1 représenté comprend un corps d'échangeur 2 et des collecteurs 3 à 6.

Dans le premier mode de réalisation illustré sur la figure 1, le corps d'échangeur 2 est délimité par un parallélépipède rectangle (illustré en traits pointillés), par exemple un cube, présentant six faces (ou surfaces planes).

Les faces incluent une première face 7, une deuxième face 8, une troisième face 9, une quatrième face 10, une cinquième face 11 et une sixième face 12.

La première face 7 constitue une première surface d'entrée.

La deuxième face 8 constitue une première surface de sortie, opposée à la première surface d'entrée.

La troisième face 9 constitue une deuxième surface d'entrée.

La quatrième face 10 constitue une deuxième surface de sortie, opposée à la deuxième surface d'entrée.

Le corps d'échangeur 2 comprend une paroi séparatrice 21 en forme de gyroïde.

Dans le cas du corps d'échangeur 2, illustré sur les figures 1 à 10, le gyroïde est une courbe tridimensionnelle, définie par l'équation :

$$F(x, y, z) + a \times \cos(x) \times \sin(y) + b \times \cos(y) \times \sin(z) + c \times \cos(z) \times \sin(x) = K$$

où F est une fonction telle que pour x et y fixés, F est strictement monotone, et a, b et c sont des coefficients non-nuls, et K est une constante.

Par exemple, chacun des coefficients a, b et c est égal à 1.

F est considéré comme strictement monotone, si pour tout $z_1 < z_2$, $F(z_1) < F(z_2)$, ou pour tout $z_1 < z_2$, $F(z_1) > F(z_2)$, dans le volume occupé par le corps d'échangeur.

La paroi séparatrice 21 sépare un premier réseau de canaux 22 pour la circulation d'un premier fluide, et un deuxième réseau de canaux 23 pour la circulation d'un deuxième fluide. Le premier réseau de canaux 22 et le deuxième réseau de canaux 23 sont imbriqués l'un dans l'autre. Tous les canaux du premier réseau de canaux 22 communiquent entre eux. Tous les canaux du deuxième réseau de canaux 23 communiquent entre eux. Mais les canaux du premier réseau de canaux 22 ne communiquent pas avec les canaux du deuxième réseau de canaux 23, de sorte que les fluides circulant dans les deux réseaux ne se mélangent pas.

La fonction F peut être une fonction linéaire de x, y et/ou z.

Par exemple, la fonction F peut être sous la forme :

$$F(x, y, z) = A \times x + B \times y + C \times z$$

où A, B et C sont des coefficients prédéfinis, parmi lesquels au moins le coefficient C est non-nul.

Le corps d'échangeur 2 comprend en outre une première paroi d'entrée 71, une première paroi de sortie 81, une deuxième paroi d'entrée 91, une deuxième paroi de sortie 101, une première paroi de fermeture 111 et une deuxième paroi de fermeture 121.

La première paroi d'entrée 71 et la première paroi de sortie 81 obturent les canaux du deuxième réseau de canaux débouchant sur la première surface d'entrée 7 et sur la première surface de sortie 8.

A cet effet, la première paroi d'entrée 71 présente une première série d'ouvertures d'entrée 72 agencées de sorte à autoriser une circulation du premier fluide à travers la première surface d'entrée 7. La première paroi d'entrée 71 autorise la pénétration du premier fluide à travers la première surface d'entrée 7 dans le premier réseau de canaux 22 tout en interdisant une pénétration du premier fluide à travers la première surface d'entrée 7 dans le deuxième réseau de canaux 23.

La première paroi de sortie 81 présente une première série d'ouvertures de sortie 82 agencées de sorte à autoriser une circulation du premier fluide à travers la première surface de sortie 8. La première paroi de sortie 81 autorise une extraction du premier fluide à travers la première surface de sortie 8 hors du premier réseau de canaux 22, tout en interdisant une extraction du deuxième fluide à travers la première surface de sortie 8 hors du deuxième réseau de canaux 23.

Ainsi, le premier fluide pénètre à l'intérieur du corps d'échangeur 2 via la première paroi d'entrée 71, circule dans les canaux du premier réseau de canaux 22, et sort du corps d'échangeur 2 via la première paroi de sortie 81.

La deuxième paroi d'entrée 91 et la deuxième paroi de sortie 101 obturent les canaux du premier réseau de canaux 22 débouchant sur la deuxième surface d'entrée 9 et sur la deuxième surface de sortie 10.

A cet effet, la deuxième paroi d'entrée 91 présente une deuxième série d'ouvertures d'entrée 92 agencées de sorte à autoriser une circulation du deuxième fluide à travers la deuxième surface d'entrée 9. La deuxième paroi d'entrée 91 autorise une pénétration du deuxième fluide à travers la deuxième surface d'entrée 9 dans le deuxième réseau de canaux 23, tout en interdisant une pénétration du deuxième fluide à travers la deuxième surface d'entrée 9 dans le premier réseau de canaux 22.

La deuxième paroi de sortie 101 présente une deuxième série d'ouvertures de sortie 102 agencées de sorte à autoriser une circulation du deuxième fluide à travers la deuxième surface de sortie 10. La deuxième paroi de sortie 101 autorise une extraction du deuxième fluide à travers la deuxième surface de sortie 10 hors du deuxième réseau de canaux 23, tout en interdisant une extraction du premier fluide à travers la deuxième surface de sortie 10 hors du premier réseau de canaux 22.

Ainsi, le deuxième fluide pénètre à l'intérieur du corps d'échangeur 2 via la deuxième paroi d'entrée 9, circule dans les canaux du deuxième réseau de canaux 23, et sort du corps d'échangeur 2 via la deuxième paroi de sortie 10.

La première paroi de fermeture 11 et la deuxième paroi de fermeture 12 obturent à la fois les canaux du premier réseau de canaux 22 et les canaux du deuxième réseau de canaux 23 débouchant sur la cinquième face 11 et la sixième face 12 du parallélépipède.

Le corps d'échangeur 2 (incluant la paroi séparatrice 21 et les parois 71, 81, 91, 101, 111 et 121) peut être formé en une seule pièce unique de matériau, par une technique de fabrication additive ou par une technique de fonderie. La technique de fabrication additive peut être une technique de fabrication additive sur lit de poudres (par exemple une technique de fusion sélective par laser - appelée SLM ou « Selective Laser Melting » en anglais), ou une technique de fabrication additive par dépôt de poudre ou de fil (par exemple une technique de dépôt sous énergie concentrée - appelée DED ou « Directed Energy Deposition » en anglais), ou une technique de fabrication additive par apport de fil et laser (appelée WLAM ou « Wire and Laser Additive Manufacturing »).

Le matériau du corps d'échangeur 2 est un matériau présentant une bonne conductivité thermique, c'est-à-dire une conductivité thermique typiquement comprise entre 20 et 400 W/mK (watts par mètre-kelvin). Le matériau est de préférence un métal, par exemple le titane, ou un alliage métallique, par exemple un acier au carbone (c'est-à-dire un acier dont le principal composant d'alliage est le carbone dont la teneur est comprise entre 0,12 et 2,0 %, les autres éléments d'alliages étant en quantité très faible) ou un acier inoxydable (c'est-à-dire un acier comportant moins de 1,2 % de carbone avec plus de 10,5 % de chrome) ou un acier austénitique (c'est-à-dire un acier caractérisé par une structure moléculaire cubique à faces centrées, comme par exemple un acier inoxydable obtenu avec 18 % de chrome et 8 % de nickel), ou un acier duplex (c'est-à-dire un acier inoxydable ayant une structure biphasée composée de ferrite complétée de 40 à 60 % d'austénite, et contenant typiquement au moins 20% de chrome, du nickel, du molybdène, de l'azote et facultativement du cuivre et/ou du tungstène) ou un acier super duplex (contenant typiquement entre 25% et 30% de chrome, entre 6 et 8% de nickel, du molybdène, de l'azote et facultativement du cuivre et/ou du tungstène) ou encore un alliage à base de nickel, d'aluminium ou de titane. Alternativement, le matériau du corps d'échangeur 2 peut être un polymère, un mélange de polymères ou un matériau composite (par exemple un polymère chargé).

Les collecteurs 3 à 6 incluent un premier collecteur d'entrée 3, un premier collecteur de sortie 4, un deuxième collecteur d'entrée 5 et un deuxième collecteur de sortie 6.

Le premier collecteur d'entrée 3 et le premier collecteur de sortie 4 sont propres à guider le premier fluide (par exemple un fluide froid) pour que le premier fluide circule à l'intérieur du corps d'échangeur 2 dans le premier réseau de canaux 22.

Le premier collecteur d'entrée 3 est fixé sur la première surface d'entrée 7 du corps d'échangeur 2. Le premier collecteur d'entrée 3 comprend une paroi 31 et une première tubulure d'entrée 32 propre à être raccordée à un premier conduit d'amenée du premier fluide.

Le premier collecteur de sortie 4 est fixé sur la première surface de sortie 8 du corps d'échangeur 2. Le premier collecteur de sortie 4 comprend une paroi 41 et une première tubulure de sortie 42 propre à être raccordée à un premier conduit d'extraction du premier fluide.

De même, le deuxième collecteur d'entrée 5 et le deuxième collecteur de sortie 6 sont propres à guider le deuxième fluide (par exemple un fluide chaud) pour que le deuxième fluide circule à l'intérieur du corps d'échangeur 2 dans le deuxième réseau de canaux 23.

Le deuxième collecteur d'entrée 5 est fixé sur la deuxième surface d'entrée 9 du corps d'échangeur 2. Le deuxième collecteur d'entrée 5 comprend une paroi 51 et une deuxième tubulure d'entrée 52 propre à être raccordée à un deuxième conduit d'amenée du deuxième fluide.

Le deuxième collecteur de sortie 6 est fixé sur la deuxième surface de sortie 10 du corps d'échangeur 2. Le deuxième collecteur de sortie 6 comprend une paroi 61 et une deuxième tubulure de sortie 62 propre à être raccordée à un deuxième conduit d'extraction du deuxième fluide.

En fonctionnement, le premier fluide (flèche A) est injecté dans l'échangeur thermique 1 via la première tubulure d'entrée 32 du premier collecteur d'entrée 3. Le premier fluide pénètre dans le corps d'échangeur 2 en passant à travers la première paroi d'entrée de fluide 71 dans le premier réseau de canaux 22. Le premier fluide circule dans le premier réseau de canaux 22 et sort du corps d'échangeur 2 en passant à travers la première paroi de sortie de fluide 81. Le premier fluide est extrait de l'échangeur via la première tubulure de sortie 42 du premier collecteur de sortie 4.

Le deuxième fluide (flèche B) est injecté dans l'échangeur thermique 1 via la deuxième tubulure d'entrée 52 du deuxième collecteur d'entrée 5. Le deuxième fluide pénètre dans le corps d'échangeur 2 en passant à travers la deuxième paroi d'entrée de fluide 91 dans le deuxième réseau de canaux 23. Le deuxième fluide circule dans le deuxième réseau de canaux 23 et sort du corps d'échangeur 2 en passant à travers la deuxième paroi de sortie de fluide 101. Le deuxième fluide est extrait de l'échangeur via la deuxième tubulure de sortie 62 du deuxième collecteur de sortie 6.

Pendant que le premier fluide et le deuxième fluide circulent dans le corps d'échangeur 2, un transfert de chaleur se produit entre les fluides à travers la paroi séparatrice 21.

La forme de gyroïde de la paroi séparatrice 21 permet de maximiser la surface d'échange entre les deux fluides, tout en limitant les pertes de charge.

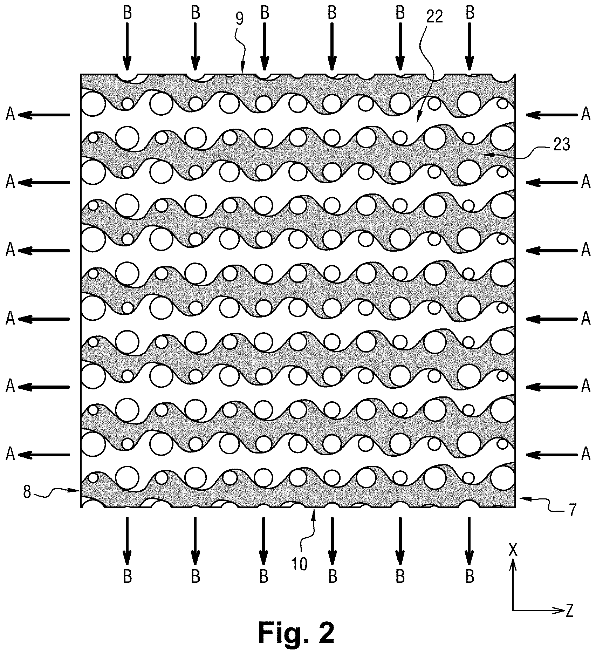

Selon un premier exemple de réalisation illustré sur les figures 2 à 4, la fonction F est sous la forme :

$$F(x, y, z) = C \times z$$

Autrement dit, les coefficients A et B sont nuls et le coefficient C est non-nul.

Dans ce cas, comme cela est visible sur la figure 2, le premier réseau de canaux 22 comprend des premiers canaux ayant une section transversale (section parallèle au plan XY) qui varie continûment depuis la première surface d'entrée 7 jusqu'à la première surface de sortie 8. Autrement dit, la section transversale des premiers canaux varie le long de l'axe Z (axe parallèle à la direction de circulation du premier fluide dans l'échangeur thermique 1).

Plus précisément, dans l'exemple illustré sur la figure 2, chacun des premiers canaux a une section transversale qui augmente continûment depuis la première surface d'entrée 7 jusqu'à la première surface de sortie 8.

De plus, la première série d'ouvertures de sortie 82 occupe une aire dans la première paroi de sortie 81 qui est supérieure à l'aire occupée par la première série d'ouvertures d'entrée 72 dans la première paroi d'entrée 71.

De cette manière, la géométrie des premiers canaux autorise une dilatation du premier fluide au cours de sa circulation dans le corps 2 de l'échangeur thermique 1, sans augmenter de manière trop importante la vitesse du premier fluide dans l'échangeur et sans augmenter de manière trop importante la pression du premier fluide.

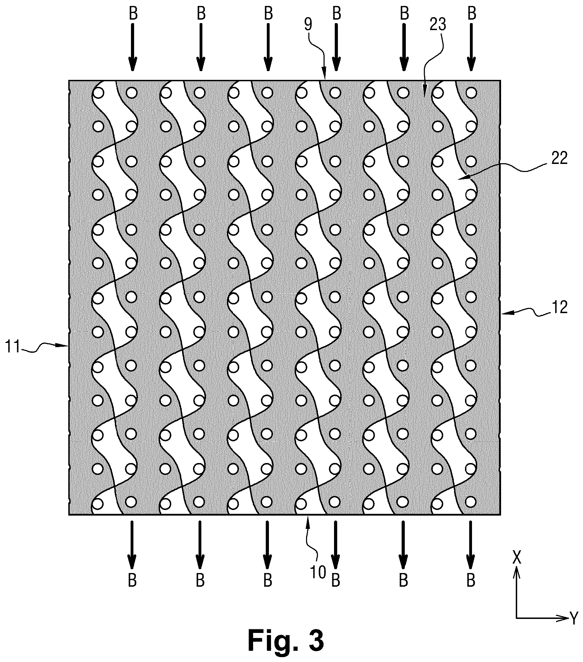

Par ailleurs, comme cela est visible sur la figure 3, le deuxième réseau de canaux 23 comprend des deuxièmes canaux ayant une section transversale (section parallèle au plan YZ) constante depuis la deuxième surface d'entrée 9 jusqu'à la deuxième surface de sortie 10. Autrement dit, la section transversale des deuxièmes canaux est constante le long de l'axe X (axe de circulation du deuxième fluide).

De plus, la deuxième série d'ouvertures de sortie 102 dans la deuxième paroi de sortie 101 présente une aire identique à l'aire de la deuxième série d'ouvertures d'entrée 92 dans la deuxième paroi d'entrée 91.

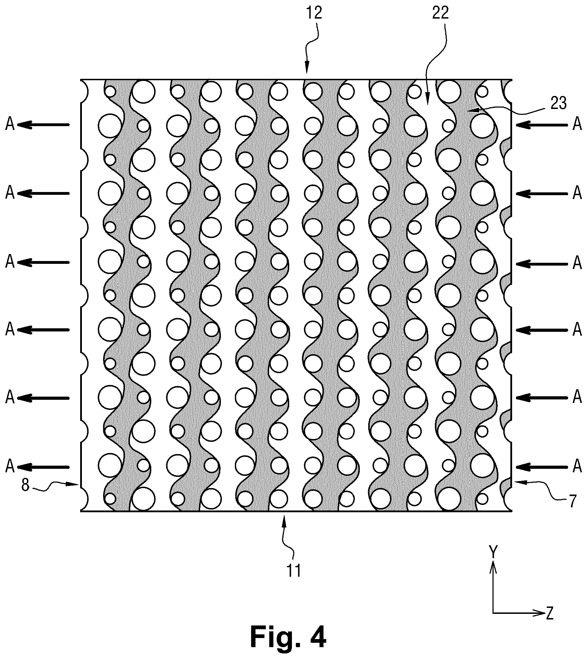

Par ailleurs, comme cela est visible sur la figure 4, chacun des premiers canaux et des deuxièmes canaux présente une section transversale constante depuis la cinquième surface 11 jusqu'à la sixième surface 12.

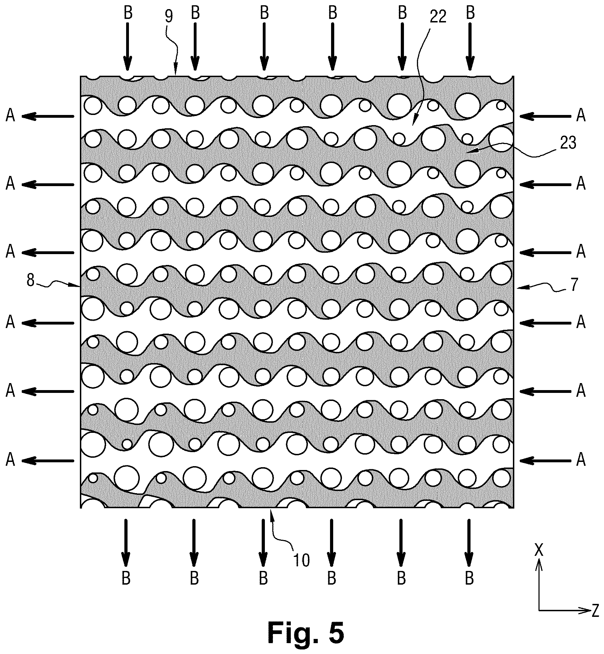

Selon un deuxième exemple de réalisation illustré sur les figures 5 à 7, la fonction F est sous la forme :

$$F(x, y, z) = A \times x + C \times z$$

Autrement dit, le coefficient B est nul et les coefficients A et C sont non-nuls.

Par exemple, A = C.

Ainsi, F est une fonction telle que pour x et y fixés, F est strictement monotone, et pour z et y fixés, F est strictement monotone.

Dans ce cas, comme cela est visible sur la figure 5, le premier réseau de canaux 22 comprend des premiers canaux ayant une section transversale (section parallèle au plan XY) qui varie continûment depuis la première surface d'entrée 7 jusqu'à la première surface de sortie 8. Autrement dit, la section transversale des premiers canaux varie le long de l'axe Z (axe parallèle à la direction de circulation du premier fluide dans l'échangeur thermique 1).

Plus précisément, dans l'exemple illustré sur la figure 5, chacun des premiers canaux a une section transversale qui augmente continûment depuis la première surface d'entrée 7 jusqu'à la première surface de sortie 8.

De plus, la première série d'ouvertures de sortie 82 occupe une aire dans la première paroi de sortie 81 qui est supérieure à l'aire occupée par la première série d'ouvertures d'entrée 72 dans la première paroi d'entrée 71.

De cette manière, la géométrie des premiers canaux autorise une dilatation du premier fluide au cours de sa circulation dans le corps 2 de l'échangeur thermique 1, sans augmenter de manière trop importante la vitesse du premier fluide dans l'échangeur et sans augmenter de manière trop importante la pression dans le premier fluide.

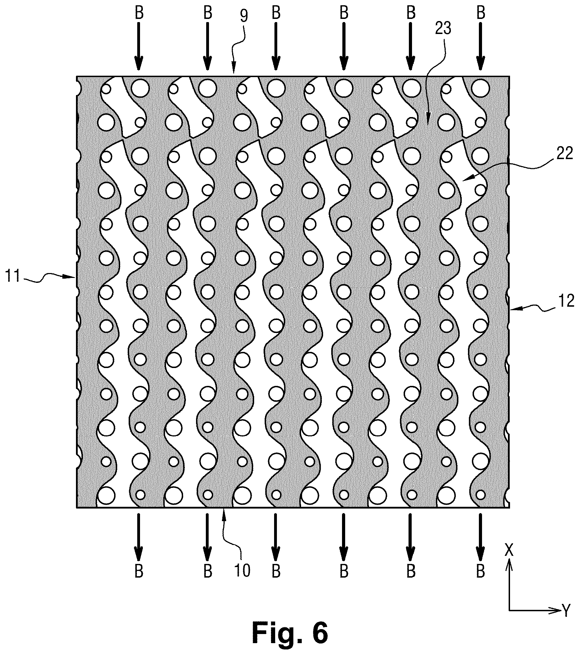

Par ailleurs, comme cela est visible sur la figure 6, le deuxième réseau de canaux 23 comprend des deuxièmes canaux ayant une section transversale (section parallèle au plan YZ) qui varie continûment depuis la deuxième surface d'entrée 9 jusqu'à la deuxième surface de sortie 10. Autrement dit, la section transversale des deuxièmes canaux varie le long de l'axe X (axe parallèle à la direction de circulation du deuxième fluide dans l'échangeur thermique 1).

Plus précisément, dans l'exemple illustré sur la figure 6, chacun des deuxièmes canaux a une section transversale qui diminue depuis la deuxième surface d'entrée 9 jusqu'à la deuxième surface de sortie 10.

De plus, la deuxième série d'ouvertures de sortie 102 occupe une aire dans la deuxième paroi de sortie 101 qui est inférieure à l'aire occupée par la deuxième série d'ouvertures d'entrée 92 dans la deuxième paroi d'entrée 91.

De cette manière, la géométrie des deuxièmes canaux autorise une contraction du deuxième fluide au cours de sa circulation dans le corps 2 de l'échangeur thermique 1, sans diminuer de manière trop importante la vitesse du deuxième fluide dans l'échangeur et sans réduire de manière trop importante la pression dans le deuxième fluide.

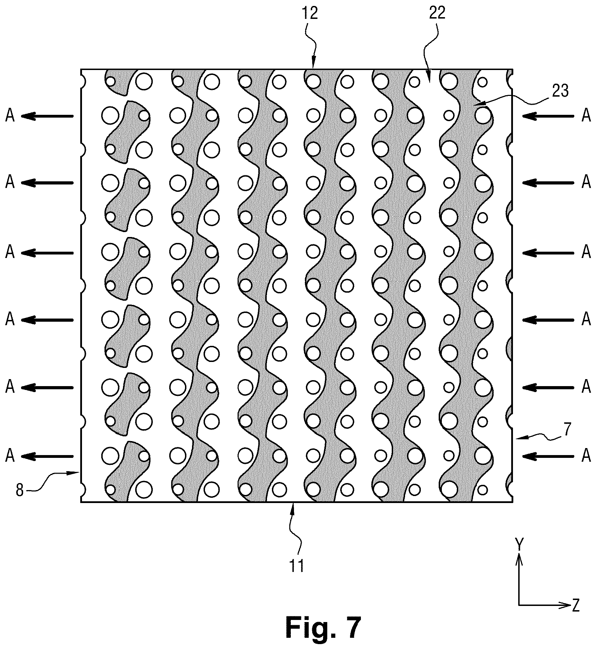

Par ailleurs, comme cela est visible sur la figure 7, chacun des premiers canaux et des deuxièmes canaux présente une section transversale (section parallèle au plan XZ) constante depuis la cinquième surface 11 jusqu'à la sixième surface 12.

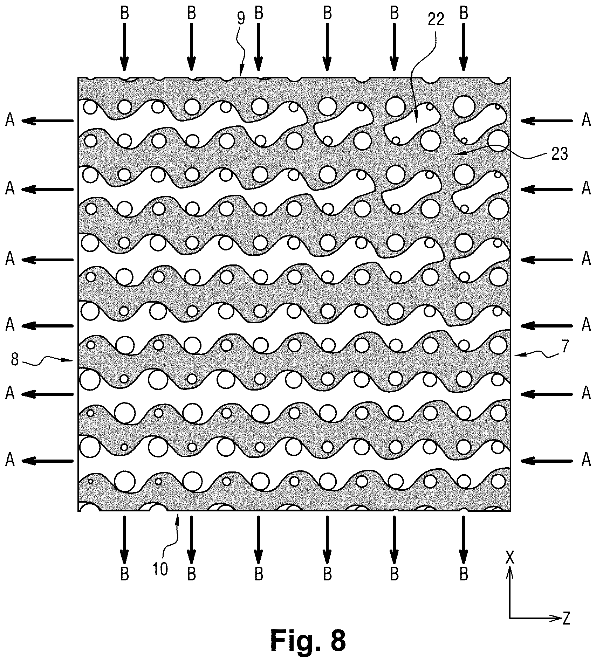

Selon un troisième exemple de réalisation illustré sur les figures 8 à 10, la fonction F est sous la forme :

$$F\,(x,\,y,\,z) = A \times x + B \times y + C \times z$$

Autrement dit, les coefficients A, B et C sont non-nuls.

Par exemple, A = B = C.

Ainsi, F est une fonction telle que pour x et y fixés, F est strictement monotone, pour z et y fixés, F est strictement monotone et pour x et z fixés, F est strictement monotone.

Dans ce cas, comme cela est visible sur la figure 8, le premier réseau de canaux 22 comprend des premiers canaux ayant une section transversale (section parallèle au plan XY) qui varie continûment depuis la première surface d'entrée 7 jusqu'à la première surface de sortie 8. Autrement dit, la section transversale des premiers canaux varie le long de l'axe Z (axe parallèle à la direction de circulation du premier fluide dans l'échangeur thermique 1).

Plus précisément, dans l'exemple illustré sur la figure 8, chacun des premiers canaux a une section transversale qui augmente continûment depuis la première surface d'entrée 7 jusqu'à la première surface de sortie 8.

De plus, la première série d'ouvertures de sortie 82 occupe une aire dans la première paroi de sortie 81 qui est supérieure à l'aire occupée par la première série d'ouvertures d'entrée 72 dans la première paroi d'entrée 71.

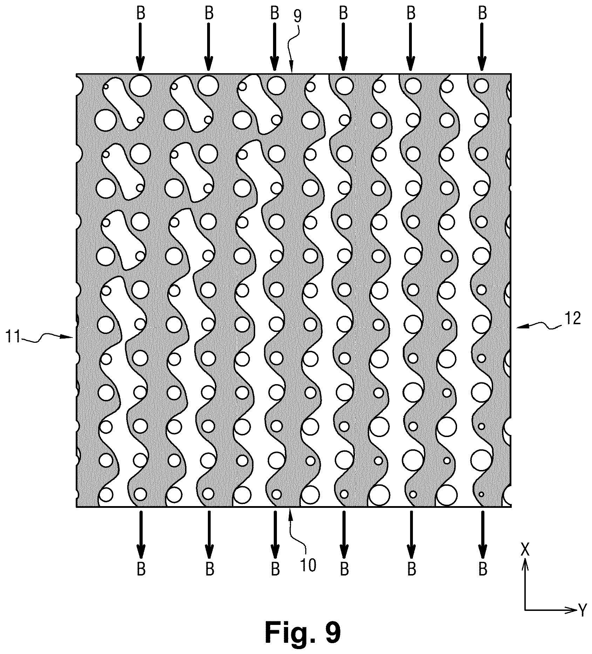

Par ailleurs, comme cela est visible sur la figure 9, le deuxième réseau de canaux 23 comprend également des deuxièmes canaux ayant une section transversale (section parallèle au plan YZ) qui varie continûment depuis la deuxième surface d'entrée 9 jusqu'à la deuxième surface de sortie 10. Autrement dit, la section transversale des deuxièmes canaux varie le long de l'axe X (axe parallèle à la direction de circulation du deuxième fluide dans l'échangeur thermique 1).

Plus précisément, dans l'exemple illustré sur la figure 9, chacun des deuxièmes canaux a une section transversale qui diminue continûment depuis la deuxième surface d'entrée 9 jusqu'à la deuxième surface de sortie 10.

De plus, la deuxième série d'ouvertures de sortie 102 occupe une aire dans la deuxième paroi de sortie 101 qui est inférieure à l'aire occupée par la deuxième série d'ouvertures d'entrée 92 dans la deuxième paroi d'entrée 91.

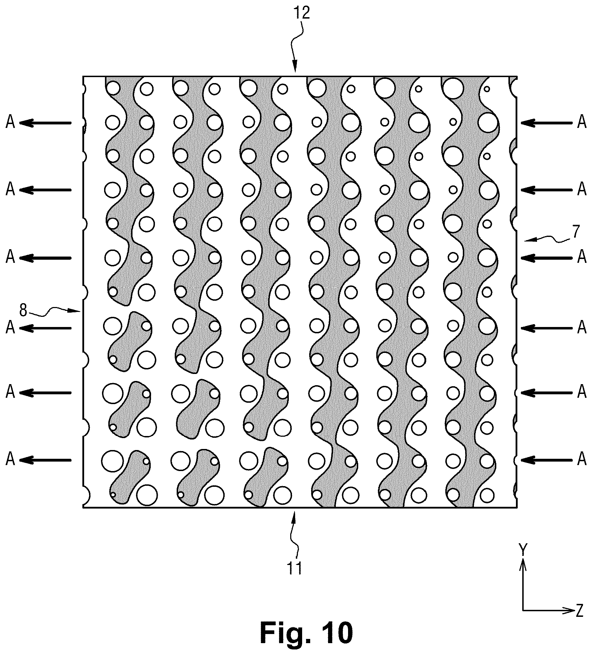

Par ailleurs, comme cela est visible sur la figure 10, chacun des premiers canaux et des deuxièmes canaux présente également une section transversale (section parallèle au plan XZ) qui varie continûment depuis la cinquième surface 11 jusqu'à la sixième surface 12.

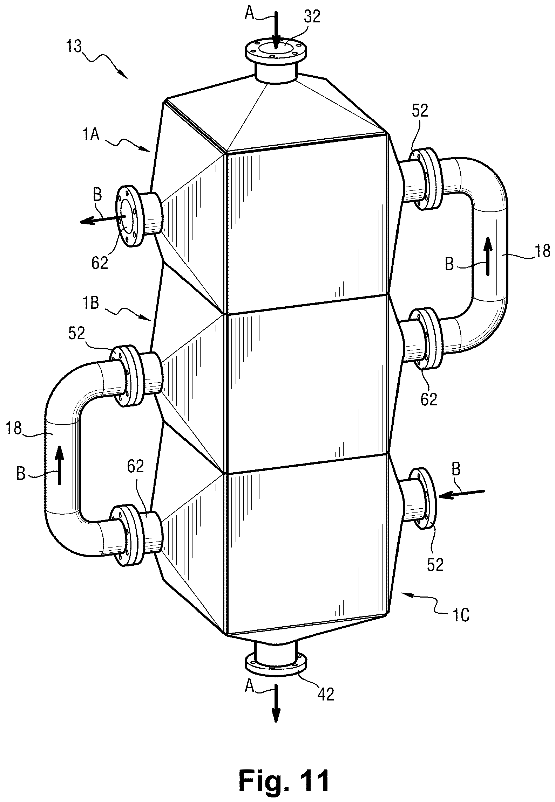

Comme illustré sur la figure 11, il est possible d'associer entre eux plusieurs échangeurs thermiques pour former un ensemble d'échangeur.

L'ensemble d'échangeur 13 illustré sur la figure 11 comprend une pluralité d'échangeurs thermiques 1A, 1B et 1C empilés les uns sur les autres. Chaque échangeur thermique 1A, 1B et 1C est conforme à l'échangeur thermique 1 de la figure 1.

Dans l'exemple illustré sur la figure 11, l'ensemble d'échangeur 13 comprend un premier échangeur thermique 1A, un deuxième échangeur thermique 1B et un troisième échangeur thermique 1C.

La première surface de sortie du premier échangeur thermique 1A est raccordée à la première surface d'entrée du deuxième échangeur thermique 1B et la première surface de sortie du deuxième échangeur thermique 1B est raccordée à la première surface d'entrée du troisième échangeur thermique 1C de sorte que le premier fluide (flèche A) circule successivement à travers le premier échangeur thermique 1A, le deuxième échangeur thermique 1B et le troisième échangeur thermique 1C.

La deuxième surface de sortie du troisième échangeur thermique 1C est raccordée à la deuxième surface d'entrée du deuxième échangeur thermique 1B et la deuxième surface de sortie du deuxième échangeur thermique 1B est raccordée à la deuxième surface d'entrée du premier échangeur thermique 1A de sorte que le deuxième fluide circule successivement à travers le troisième échangeur thermique 1C, le deuxième échangeur thermique 1B et le premier échangeur thermique 1A.

Dans l'exemple illustré sur la figue 11, le raccordement d'une deuxième surface de sortie d'un échangeur à une deuxième surface d'entrée de l'échangeur thermique suivant est réalisé à l'aide de conduits 18. Chaque conduit 18 a une extrémité reliée à la deuxième tubulure de sortie 52 de l'échangeur et une autre extrémité reliée à la deuxième tubulure d'entrée 62 de l'échangeur suivant dans l'empilement.

L'ensemble d'échangeur peut être conçu de sorte que dans chaque échangeur thermique 1A à 1C, le premier réseau de canaux 22 comprend des premiers canaux ayant une section transversale qui augmente continûment le long de la trajectoire de circulation du premier fluide.

En outre, chaque échangeur thermique peut comprendre un corps d'échangeur 2 ayant des premiers canaux ayant une section transversale supérieure à une section transversale de l'échangeur précédent dans l'empilement, de sorte que le premier fluide circule successivement dans chaque échangeur 1A, 1B et 1C, via des premiers canaux présentant une section qui augmente d'un échangeur à l'échangeur suivant.

De même, il est possible de concevoir l'ensemble d'échangeur de sorte que dans chaque échangeur thermique 1A à 1C, le deuxième réseau de canaux 23 comprend des deuxièmes canaux ayant une section transversale qui diminue le long de la trajectoire de circulation du deuxième fluide.

En outre, chaque échangeur thermique peut comprendre un corps d'échangeur 2 ayant des deuxièmes canaux ayant une section transversale inférieure à une section transversale de l'échangeur précédent dans l'empilement, de sorte que le deuxième fluide circule successivement dans chaque échangeur 1C, 1B et 1A, via des deuxièmes canaux présentant une section qui diminue continûment d'un échangeur à l'échangeur suivant.

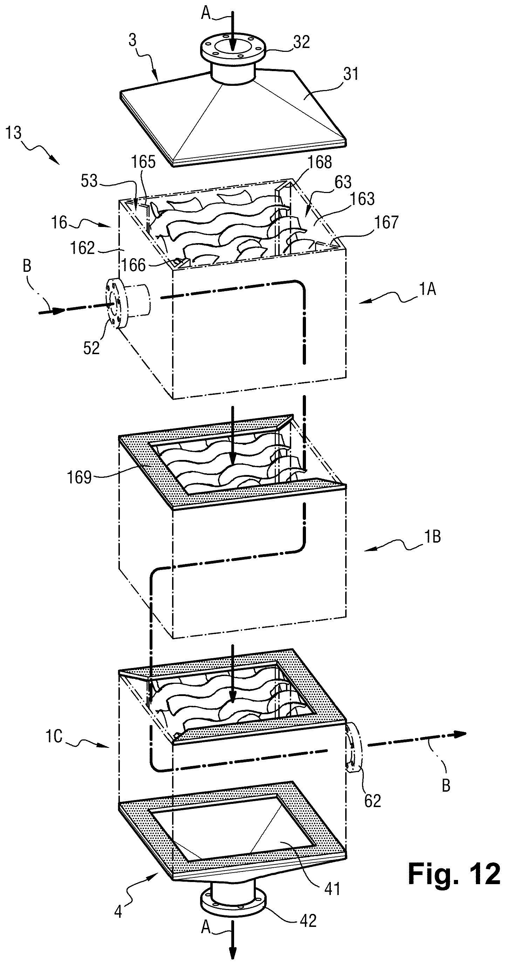

La figure 12 représente de manière schématique une variante de l'ensemble d'échangeur 13 de la figure 11.

Comme dans l'exemple de la figure 11, l'ensemble d'échangeur 13 comprend un premier échangeur thermique 1A, un deuxième échangeur thermique 1B et un troisième échangeur thermique 1C.

La première surface de sortie du premier échangeur thermique 1A est raccordée à la première surface d'entrée du deuxième échangeur thermique 1B et la première surface de sortie du deuxième échangeur thermique 1B est raccordée à la première surface d'entrée du troisième échangeur thermique 1C de sorte que le premier fluide (flèche A) circule successivement à travers le premier échangeur thermique 1A, le deuxième échangeur thermique 1B et le troisième échangeur thermique 1C.

La deuxième surface de sortie du premier échangeur thermique 1A est raccordée à la deuxième surface d'entrée du deuxième échangeur thermique 1B et la deuxième surface de sortie du deuxième échangeur thermique 1B est raccordée à la deuxième surface d'entrée du troisième échangeur thermique 1C de sorte que le deuxième fluide circule successivement à travers le premier échangeur thermique 1A, le deuxième échangeur thermique 1B et le troisième échangeur thermique 1C.

Chaque échangeur thermique 1A, 1B et 1C peut comprendre un corps d'échangeur 2 identique à celui de l'échangeur thermique 1A, 1B et 1C de la figure 11.

Cependant, dans la variante illustrée sur la figure 12, chaque échangeur thermique 1A, 1B et 1C comprend en outre un carter externe 16 entourant le corps d'échangeur 2 et des cloisons 165, 166, 167 et 168 reliant le carter externe 16 au corps d'échangeur 2.

La carter externe 16 comprend une première paroi 162 s'étendant à distance et en regard de la deuxième surface d'entrée 9 du corps d'échangeur 2 et une deuxième paroi 163 s'étend à distance et en regard de la deuxième surface de sortie 10 du corps d'échangeur 2.

Les cloisons 165, 166, 167 et 168 incluent une première cloison 165 et une deuxième cloison 166.

En particulier, les cloisons 165 et 166 délimitent avec la première paroi 162 et la deuxième surface d'entrée 9, un espace d'entrée 53 destiné à recevoir le deuxième fluide en entrée du corps d'échangeur 2. Autrement dit, la première paroi 162 et les cloisons 165, 166 forment le deuxième collecteur d'entrée 5.

Les cloisons 167 et 168 délimitent avec la deuxième paroi 163 et la deuxième surface de sortie 10, un espace de sortie 63 destiné à recevoir le deuxième fluide en sortie du corps d'échangeur 2. Autrement dit, la deuxième paroi 163 et les cloisons 167 et 168 forment le deuxième collecteur de sortie 6.

Dans l'exemple illustré sur la figure 12, le deuxième fluide (flèche B) circule successivement à travers le premier échangeur 1A, le deuxième échangeur 1B puis le troisième échangeur 1C.

A cet effet, les échangeurs thermiques 1A, 1B et 1C sont disposés les uns à la suite des autres dans l'empilement, de sorte que l'espace de sortie 63 d'un échangeur thermique (par exemple l'échangeur thermique 1A) communique avec l'espace d'entrée 53 de l'échangeur thermique suivant (par exemple l'échangeur thermique 1B) dans le sens de circulation du deuxième fluide.

De plus, l'ensemble d'échangeur 13 comprend une pluralité de plaques de séparation 169. Chaque plaque de séparation 169 est disposée entre deux échangeurs thermiques successifs dans l'empilement (par exemple entre les échangeurs thermiques 1A et 1B). Chaque plaque de séparation 169 empêche une communication de fluide entre l'espace d'entrée 53 d'un échangeur thermique et l'espace de sortie 63 de l'échangeur thermique dans le sens de circulation du deuxième fluide.

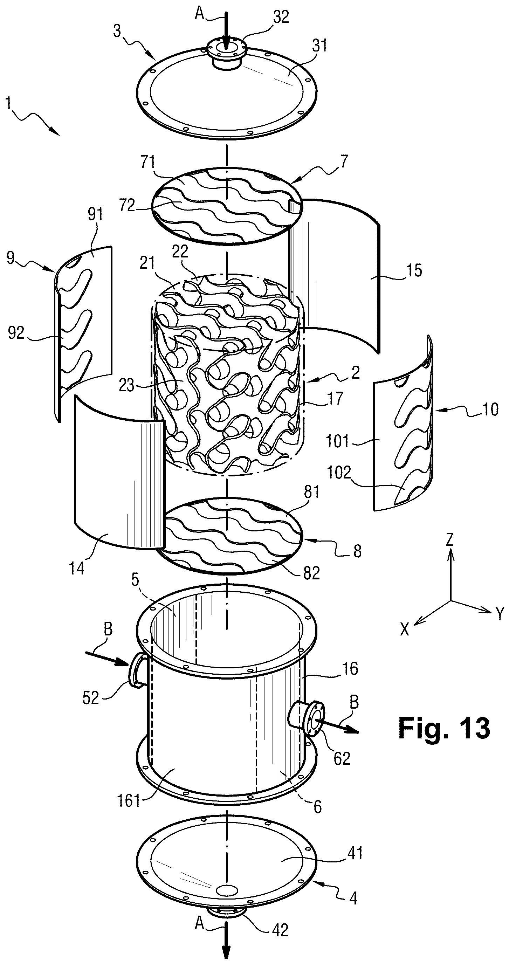

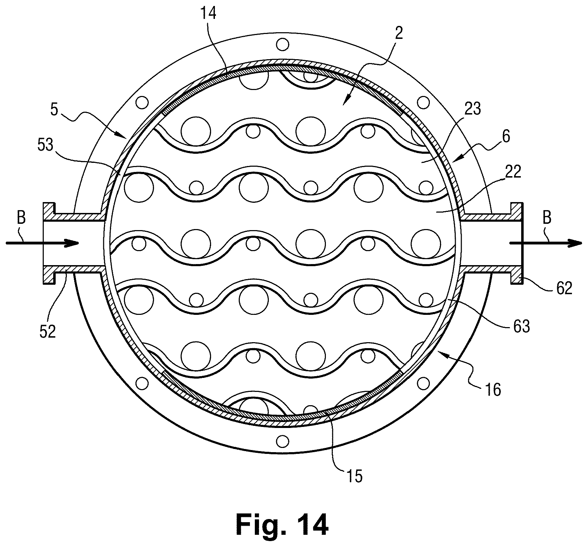

Les figures 13 et 14 représentent de manière schématique un échangeur thermique 1 conforme à un deuxième mode de réalisation de l'invention.

L'échangeur thermique 1 représenté comprend un corps d'échangeur 2, deux espaceurs 14 et 15, un carter 16 et deux plaques d'extrémité 3 et 4.

Dans le deuxième mode de réalisation illustré sur les figures 12 et 13, le corps d'échangeur 2 est délimité par un cylindre de révolution. Le cylindre de révolution présente un axe Z de révolution. Le cylindre comprend une surface cylindrique 17 et deux faces transversales 7 et 8 s'étendant chacune dans un plan orthogonal à l'axe Z.

La première face 7 constitue une première surface d'entrée.

La deuxième face 8 constitue une première surface de sortie, opposée à la première surface d'entrée.

La surface cylindrique 17 comprend une portion de surface formant une deuxième surface d'entrée 9 et une portion de surface formant une deuxième surface de sortie 10, opposée à la deuxième surface d'entrée.

Le corps d'échangeur 2 comprend une paroi séparatrice 21 en forme de gyroïde.

Comme dans le premier mode de réalisation, le gyroïde est une courbe tridimensionnelle, définie par l'équation :

$$F(x, y, z) + a \times \cos(x) \times \sin(y) + b \times \cos(y) \times \sin(z) + c \times \cos(z) \times \sin(x) = K$$

où F est une fonction telle que pour x et y fixés, F est strictement monotone, et a, b et c sont des coefficients non-nuls, et K est une constante.

Par exemple, chacun des coefficients a, b et c est égal à 1.

F est considéré comme strictement monotone, si pour tout $z_1 < z_2$, $F(z_1) < F(z_2)$, ou pour tout $z_1 < z_2$, $F(z_1) > F(z_2)$, dans le volume occupé par le corps d'échangeur.

La paroi séparatrice 21 sépare un premier réseau de canaux 22 pour la circulation d'un premier fluide, et un deuxième réseau de canaux 23 pour la circulation d'un deuxième fluide. Le premier réseau de canaux 22 et le deuxième réseau de canaux 23 sont imbriqués l'un dans l'autre. Mais les fluides circulant dans les deux réseaux de canaux 22 et 23 ne se mélangent pas.

Comme dans le cas du premier mode de réalisation, la fonction F peut être une fonction linéaire de x, y et/ou z.

Par exemple, la fonction F peut être sous la forme :

$$F(x, y, z) = A \times x + B \times y + C \times z$$

où A, B et C sont des coefficients, parmi lesquels au moins le coefficient C est non-nul.

Le corps d'échangeur 2 comprend en outre une première paroi d'entrée 71, une première paroi de sortie 81, une deuxième paroi d'entrée 91 et une deuxième paroi de sortie 101.

La première paroi d'entrée 71 et la première paroi de sortie 81 obturent les canaux du deuxième réseau de canaux 23 débouchant sur la première surface d'entrée 7 et sur la première surface de sortie 8.

A cet effet, la première paroi d'entrée 71 présente une première série d'ouvertures d'entrée 72 agencées de sorte à autoriser une circulation du premier fluide à travers la première surface d'entrée 7. La première paroi d'entrée 71 autorise la pénétration du premier fluide à travers la première surface d'entrée 7 dans le premier réseau de canaux 22 tout en interdisant une pénétration du premier fluide à travers la première surface d'entrée 7 dans le deuxième réseau de canaux 23.

La première paroi de sortie 81 présente une première série d'ouvertures de sortie 82 agencées de sorte à autoriser une circulation du premier fluide à travers la première surface de sortie 8. La première paroi de sortie 81 autorise une extraction du premier fluide à travers la première surface de sortie 8 hors du premier réseau de canaux 22, tout en interdisant une extraction du deuxième fluide à travers la première surface de sortie 8 hors du deuxième réseau de canaux 23.

Ainsi, le premier fluide pénètre à l'intérieur du corps d'échangeur 2 via la première paroi d'entrée 71, circule dans les canaux du premier réseau de canaux 22, et sort du corps d'échangeur 2 via la première paroi de sortie 81.

La deuxième paroi d'entrée 91 et la deuxième paroi de sortie 101 obturent les canaux du premier réseau de canaux 22 débouchant sur la deuxième surface d'entrée 9 et sur la deuxième surface de sortie 10.

A cet effet, la deuxième paroi d'entrée 91 présente une deuxième série d'ouvertures d'entrée 92 agencées de sorte à autoriser une circulation du deuxième fluide à travers la deuxième surface d'entrée 9. La deuxième paroi d'entrée 91 autorise une pénétration du deuxième fluide à travers la deuxième surface d'entrée 9 dans le deuxième réseau de canaux 23, tout en interdisant une pénétration du deuxième fluide à travers la deuxième surface d'entrée 9 dans le premier réseau de canaux 22.

La deuxième paroi de sortie 101 présente une deuxième série d'ouvertures de sortie 102 agencées de sorte à autoriser une circulation du deuxième fluide à travers la deuxième surface de sortie 10. La deuxième paroi de sortie 101 autorise une extraction du deuxième fluide à travers la deuxième surface de sortie 10 hors du deuxième réseau de canaux 23, tout en interdisant une extraction du premier fluide à travers la deuxième surface de sortie 10 hors du premier réseau de canaux 22.

Ainsi, le deuxième fluide pénètre à l'intérieur du corps d'échangeur 2 via la deuxième paroi d'entrée 91, circule dans les canaux du deuxième réseau de canaux 23, et sort du corps d'échangeur 2 via la deuxième paroi de sortie 101.

Le corps d'échangeur 2 (incluant la paroi séparatrice 21 et les parois 71, 81, 91 et 101) peut être formé en une seule pièce unique de matériau, par une technique de fabrication additive (par exemple une technique de fusion sélective par laser).

Le matériau du corps d'échangeur 2 est du métal, par exemple du titane.

Les espaceurs 14 et 15 comprennent un premier espaceur 14 et un deuxième espaceur 15.

Le premier espaceur 14 est disposé contre une première portion de la surface cylindrique 17 de manière à obturer à la fois les canaux du premier réseau de canaux 22 et les canaux du deuxième réseau de canaux 23.

Le deuxième espaceur 15 est disposé contre une deuxième portion de la surface cylindrique, dans une position diamétralement opposée à celle du premier espaceur 14, de manière à obturer à la fois les canaux du premier réseau de canaux 22 et les canaux du deuxième réseau de canaux 23.

Le carter 16 et les deux plaques d'extrémité 3 et 4 forment un boîtier contenant le corps d'échangeur 2 et les espaceurs 14 et 15.

Le carter 16 comprend une paroi 161 de forme générale cylindrique. La paroi 161 du carter 16 entoure le corps d'échangeur 2 et les espaceurs 14 et 15. La paroi 161 du carter 16 peut être fixée sur les espaceurs 14 et 15, par exemple par des lignes de soudure.

Les espaceurs 14 et 15 permettent de maintenir la paroi 161 du carter 16 à distance de la surface cylindrique 17 du corps d'échangeur 2. Plus précisément, les espaceurs 14 et 15 permettent de ménager deux espaces 53 et 63 entre la paroi 161 et la surface cylindrique 17.

Les plaques d'extrémité 3 et 4 incluent une première plaque d'extrémité 3 et une deuxième plaque d'extrémité 4.

La première plaque d'extrémité 3 comprend une paroi 31 ayant une forme générale circulaire et une première tubulure d'entrée 32. La première tubulure d'entrée 32 est propre à être raccordée à un premier conduit d'amenée du premier fluide.

La première plaque d'extrémité 3 forme ainsi un premier collecteur d'entrée. La première plaque d'extrémité 3 est fixée sur la calandre 16, par exemple par une ligne de soudure, de manière à s'étendre en regard de la première surface d'entrée 7 du corps d'échangeur 2.

La deuxième plaque d'extrémité 4 comprend une paroi 41 ayant une forme générale circulaire et une première tubulure de sortie 42. La première tubulure de sortie 42 est propre à être raccordée à un premier conduit d'extraction du premier fluide.

La deuxième plaque d'extrémité 4 forme ainsi un premier collecteur de sortie. La deuxième plaque d'extrémité 4 est fixée sur la calandre 16, par exemple par une ligne de soudure, de manière à s'étendre en regard de la première surface de sortie 8 du corps d'échangeur 2.

Le premier collecteur d'entrée 3 et le premier collecteur de sortie 4 sont propres à guider le premier fluide (par exemple un fluide froid) pour que le premier fluide circule à l'intérieur du corps d'échangeur 2 dans le premier réseau de canaux 22.

Le carter 16 comprend une deuxième tubulure d'entrée 52 et une deuxième tubulure de sortie 62.

La deuxième tubulure d'entrée 52 est propre à être raccordée à un deuxième conduit d'amenée du deuxième fluide.

La deuxième tubulure de sortie 62 est propre à être raccordée à un deuxième conduit d'extraction du deuxième fluide.

Le deuxième collecteur d'entrée 5 et le deuxième collecteur de sortie 6 sont formés par les portions du carter 16 s'étendant entre les espaceurs 14 et 15 et délimitant les espaces 53 et 63.

Le deuxième collecteur d'entrée 5 et le deuxième collecteur de sortie 6 sont propres à guider le deuxième fluide (par exemple un fluide chaud) pour que le deuxième fluide circule à l'intérieur du corps d'échangeur dans le deuxième réseau de canaux.

En fonctionnement, le premier fluide (flèche A) est injecté dans l'échangeur thermique 1 via la première tubulure d'entrée 32 du premier collecteur d'entrée 3. Le premier fluide pénètre dans le corps d'échangeur 2 en passant à travers la première paroi d'entrée de fluide 71 dans le premier réseau de canaux 22. Le premier fluide circule dans le premier réseau de canaux 22 et sort du corps d'échangeur 2 en passant à travers la première paroi de sortie de fluide 81. Le premier fluide est extrait de l'échangeur via la première tubulure de sortie 42 du premier collecteur de sortie 4.

Le deuxième fluide (flèche B) est injecté dans l'échangeur thermique 1 via la deuxième tubulure d'entrée 52 du deuxième collecteur d'entrée 5. Le deuxième fluide pénètre dans le corps d'échangeur 2 en passant à travers la deuxième paroi d'entrée de fluide 91 dans le deuxième réseau de canaux 23. Le deuxième fluide circule dans le deuxième réseau de canaux 23 et sort du corps d'échangeur 2 en passant à travers la deuxième paroi de sortie de fluide 101. Le deuxième fluide est extrait de l'échangeur via la deuxième tubulure de sortie 62 du deuxième collecteur de sortie 6.

Pendant que le premier fluide et le deuxième fluide circulent dans le corps d'échangeur 2, un transfert de chaleur se produit entre les fluides à travers la paroi séparatrice 21.

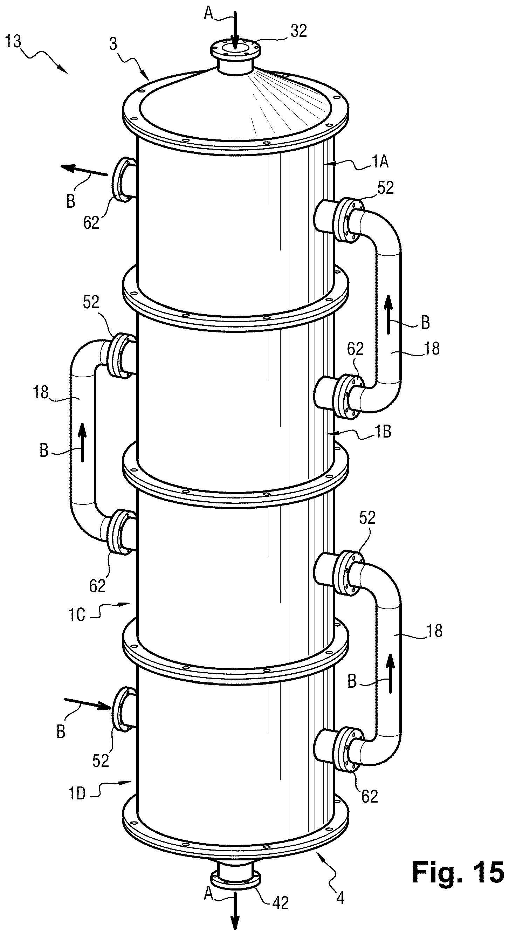

Comme illustré sur la figure 15, il est possible d'associer entre eux plusieurs échangeurs thermiques 1 pour former un ensemble d'échangeur 13.

L'ensemble d'échangeur 13 illustré sur la figure 15 comprend une pluralité d'échangeurs thermiques 1A à 1D empilés les uns sur les autres. Chaque échangeur thermique 1A à 1D est conforme à l'échangeur thermique des figures 13 et 14.

Dans l'exemple illustré sur la figure 15, l'ensemble d'échangeur 13 comprend un premier échangeur thermique 1A, un deuxième échangeur thermique 1B, un troisième échangeur thermique 1C et un quatrième échangeur thermique 1D.

La première surface de sortie du premier échangeur thermique 1A est raccordée à la première surface d'entrée 7 du deuxième échangeur thermique 1B, la première surface de sortie du deuxième échangeur thermique 1B est raccordée à la première surface d'entrée du troisième échangeur thermique 1C, et la première surface de sortie du troisième échangeur thermique 1C est raccordée à la première surface d'entrée du quatrième échangeur thermique 1D. Ainsi, le premier fluide (flèche A) circule successivement à travers le premier échangeur thermique 1A, le deuxième échangeur thermique 1B, le troisième échangeur thermique 1C et le quatrième échangeur thermique 1D.

La deuxième surface de sortie du quatrième échangeur thermique 1D est raccordée à la deuxième surface d'entrée du troisième échangeur thermique 1C, la deuxième surface de sortie du troisième échangeur thermique 1C est raccordée à la deuxième surface d'entrée du deuxième échangeur thermique 1B et la deuxième surface de sortie du deuxième échangeur thermique 1B est raccordée à la deuxième surface d'entrée du premier échangeur thermique 1A. Ainsi, le deuxième fluide (flèche B) circule successivement à travers le quatrième échangeur thermique 1D, le troisième échangeur thermique 1C, le deuxième échangeur thermique 1B et le premier échangeur thermique 1A.

Dans l'exemple illustré sur la figue 15, le raccordement d'une deuxième surface de sortie d'un échangeur à une deuxième surface d'entrée de l'échangeur thermique suivant est réalisé à l'aide de conduites 18.

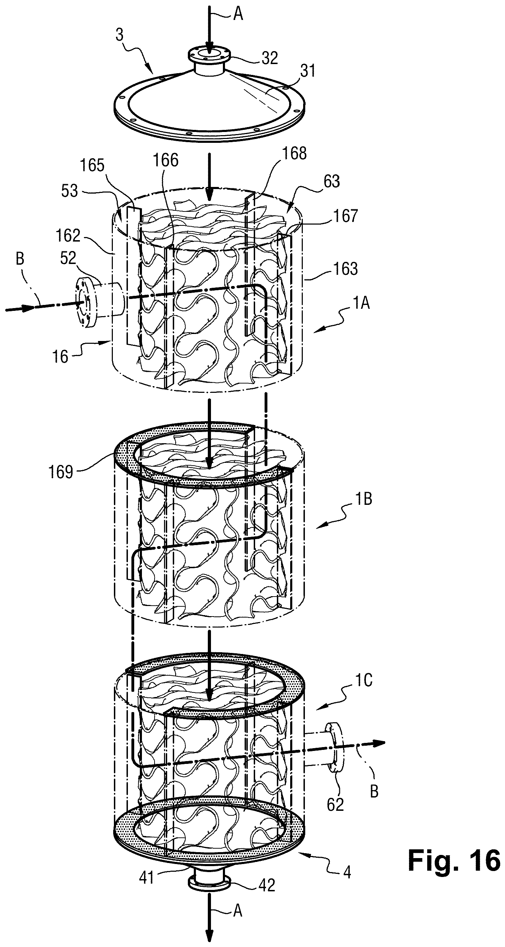

La figure 16 représente de manière schématique une variante de l'ensemble d'échangeur de la figure 15.

L'ensemble d'échangeur 13 comprend un premier échangeur thermique 1A, un deuxième échangeur thermique 1B et un troisième échangeur thermique 1C.

La première surface de sortie du premier échangeur thermique 1A est raccordée à la première surface d'entrée du deuxième échangeur thermique 1B et la première surface de sortie du deuxième échangeur thermique 1B est raccordée à la première surface d'entrée du troisième échangeur thermique 1C de sorte que le premier fluide (flèche A) circule successivement à travers le premier échangeur thermique 1A, le deuxième échangeur thermique 1B et le troisième échangeur thermique 1C.

La deuxième surface de sortie du premier échangeur thermique 1A est raccordée à la deuxième surface d'entrée du deuxième échangeur thermique 1B et la deuxième surface de sortie du deuxième échangeur thermique 1B est raccordée à la deuxième surface d'entrée du troisième échangeur thermique 1C de sorte que le deuxième fluide circule successivement à travers le premier échangeur thermique 1A, le deuxième échangeur thermique 1B et le troisième échangeur thermique 1C.

Chaque échangeur thermique 1A, 1B et 1C comprend un corps d'échangeur 2 conforme à celui de l'échangeur thermique 1 de la figure 1.

Cependant, dans la variante illustrée sur la figure 12, chaque échangeur thermique 1A, 1B et 1C comprend en outre un carter externe 16 entourant le corps d'échangeur 2 et des cloisons reliant le carter externe 16 au corps d'échangeur 2.

Le carter externe 16 comprend une paroi 161 de forme générale cylindrique de révolution entourant le corps d'échangeur 2. La paroi 161 comprend une première portion de paroi 162 s'étendant à distance et en regard de la deuxième surface d'entrée 9 du corps d'échangeur 2 et une deuxième portion de paroi 163 s'étend à distance et en regard de la deuxième surface de sortie 10 du corps d'échangeur 2.

Chaque échangeur thermique 1A, 1B et 1C comprend des cloisons 165, 166, 167 et 168. Les cloisons délimitent des espaces 53 et 63 entre le carter externe 16 et le corps d'échangeur 2.

Les cloisons incluent une première cloison 165 et une deuxième cloison 166. La première cloison 165 et la deuxième cloison 166 délimitent avec la première portion de paroi 162 et la première surface d'entrée 9 un espace d'entrée 53 destiné à recevoir le deuxième fluide en entrée du corps d'échangeur 2. Autrement dit, la première paroi 9 et les cloisons 165, 166 forment le deuxième collecteur d'entrée 5.

Les cloisons incluent une troisième cloison 167 et une quatrième cloisons 168. La troisième cloison 167 et la quatrième cloisons 168 délimitent avec la deuxième portion de paroi 163 et la deuxième surface de sortie 10, un espace de sortie 63 destiné à recevoir le deuxième fluide en sortie du corps d'échangeur 2. Autrement dit, la deuxième portion de paroi 163 et les cloisons 167 et 168 forment le deuxième collecteur de sortie 6.

Dans l'exemple illustré sur la figure 16, le deuxième fluide (flèche B) circule successivement à travers le premier échangeur 1A, le deuxième échangeur 1B puis le troisième échangeur 1C.

A cet effet, les échangeurs thermiques 1A, 1B et 1C sont disposés les uns à la suite des autres dans l'empilement, de sorte que l'espace de sortie 63 d'un échangeur thermique (par exemple l'échangeur thermique 1A) communique avec l'espace d'entrée 53 de l'échangeur thermique suivant (par exemple l'échangeur thermique 1B) dans le sens de circulation du deuxième fluide.

De plus, l'ensemble d'échangeur 13 comprend une pluralité de plaques de séparation 169. Chaque plaque de séparation 169 est disposée entre deux échangeurs thermiques successifs dans l'empilement (par exemple entre l'échangeur 1A et l'échangeur 1B). Dans l'exemple illustré sur la figure 16, chaque plaque de séparation 169 présente une forme en C. Chaque plaque de séparation 169 empêche une communication de fluide entre l'espace d'entrée 53 d'un échangeur thermique et l'espace de sortie 63 de l'échangeur thermique suivant dans le sens de circulation du deuxième fluide.

Il est possible d'empiler un nombre variable d'échangeurs thermiques en fonction des besoins. Dans ce cas, la première surface de sortie d'un échangeur thermique est raccordée à la première surface d'entrée d'un autre échangeur thermique adjacent dans l'empilement de sorte que le premier fluide circule successivement à travers les échangeurs thermiques de l'empilement. La deuxième surface de sortie de l'autre échangeur thermique adjacent est raccordée à la deuxième surface d'entrée de l'échangeur thermique de sorte que le deuxième fluide circule successivement à travers les échangeurs thermiques de l'empilement.

## Revendications

1. Echangeur thermique (1) comprenant un corps d'échangeur (2) délimité par une première surface d'entrée (7), une première surface de sortie (8), une deuxième surface d'entrée (9) et une deuxième surface de sortie (10), le corps d'échangeur (2) comprenant une paroi séparatrice (21) en forme de gyroïde séparant un premier réseau de canaux (22) pour la circulation d'un premier fluide depuis la première surface d'entrée (7) jusqu'à la première surface de sortie (8), et un deuxième réseau de canaux (23) pour la circulation d'un deuxième fluide depuis la deuxième surface d'entrée (9) jusqu'à la deuxième surface de sortie (10), **caractérisé en ce que** le premier réseau de canaux (22) comprend des premiers canaux ayant une section transversale qui varie en augmentant continument depuis la première surface d'entrée (7) jusqu'à la première surface de sortie (8), et **en ce que** le deuxième réseau de canaux (23) comprend des deuxièmes canaux ayant une section transversale qui varie en diminuant continument depuis la deuxième surface d'entrée (9) jusqu'à la deuxième surface de sortie (10).

2. Echangeur thermique (1) selon la revendication 1, dans lequel le corps d'échangeur (2) comprend une première paroi d'entrée (71) autorisant une pénétration du premier fluide à travers la première surface d'entrée (7) dans le premier réseau de canaux (22), et interdisant une pénétration du premier fluide à travers la première surface d'entrée (7) dans le deuxième réseau de canaux (23).

3. Echangeur thermique (1) selon la revendication 2, comprenant un premier collecteur d'entrée (3) pour amener le premier fluide jusqu'à la première paroi d'entrée (71).

4. Echangeur thermique (1) selon l'une des revendications 1 à 3, dans lequel le corps d'échangeur (2) comprend une première paroi de sortie (81) autorisant une extraction du premier fluide à travers la première surface de sortie (8) hors du premier réseau de canaux (22), et interdisant une extraction du deuxième fluide à travers la première surface de sortie (8) hors du deuxième réseau de canaux (23).

5. Echangeur thermique (1) selon la revendication 4, comprenant un premier collecteur de sortie (4) pour extraire le premier fluide à travers la première paroi de sortie (81).

**6.** Echangeur thermique (1) selon l'une des revendications 1 à 5, dans lequel le corps d'échangeur (2) comprend une deuxième paroi d'entrée (91) autorisant une pénétration du deuxième fluide à travers la deuxième surface d'entrée (9) dans le deuxième réseau de canaux (23), et interdisant une pénétration du deuxième fluide à travers la deuxième surface d'entrée (9) dans le deuxième réseau de canaux (23).

**7.** Echangeur thermique selon la revendication 6, comprenant un deuxième collecteur d'entrée (5) pour amener le deuxième fluide à travers la deuxième paroi d'entrée (91).

**8.** Echangeur thermique selon l'une des revendications 1 à 7, dans lequel le corps d'échangeur (2) comprend une deuxième paroi de sortie (101) autorisant une extraction du deuxième fluide à travers la deuxième surface de sortie (10) hors du deuxième réseau de canaux (23), et interdisant une extraction du premier fluide à travers la deuxième surface de sortie (10) hors du premier réseau de canaux (23).

**9.** Echangeur thermique selon la revendication 8, comprenant un deuxième collecteur de sortie (6) pour extraire le deuxième fluide à travers la deuxième paroi de sortie (10).

**10.** Ensemble d'échangeur thermique (13) comprenant une pluralité d'échangeurs thermiques (1A-1D) selon l'une des revendications 1 à 9, incluant un premier échangeur thermique (1A) et un deuxième échangeur thermique (1B), dans lequel la première surface de sortie (8) du premier échangeur thermique (1A) est raccordée à la première surface d'entrée (7) du deuxième échangeur thermique (1B) de sorte que le premier fluide circule successivement à travers le premier échangeur thermique (1A) et à travers le deuxième échangeur thermique (1B), et dans lequel la deuxième surface de sortie (10) du deuxième échangeur thermique (1B) est raccordée à la deuxième surface d'entrée (9) du premier échangeur thermique (1A) de sorte que le deuxième fluide circule successivement à travers le deuxième échangeur thermique (1B) et à travers le premier échangeur thermique (1A).

**Patentansprüche**

**1.** Wärmetauscher (1), umfassend einen Tauscherkörper (2), der von einer ersten Einlassfläche (7), einer ersten Auslassfläche (8), einer zweiten Einlassfläche (9) und einer zweiten Auslassfläche (10) begrenzt wird, wobei der Tauscherkörper (2) eine Trennwand (21) in Form eines Gyroids umfasst, die ein erstes Kanalnetz (22) für die Zirkulation eines ersten Fluids von der ersten Einlassfläche (7) zu der ersten Auslassfläche (8) und ein zweites Kanalnetz (23) für die Zirkulation eines zweiten Fluids von der zweiten Einlassfläche (9) zu der zweiten Auslassfläche (10) trennt, **dadurch gekennzeichnet, dass** das erste Kanalnetz (22) erste Kanäle mit einem Querschnitt umfasst, der sich kontinuierlich zunehmend von der ersten Einlassfläche (7) zu der ersten Auslassfläche (8) ändert, und dass das zweite Kanalnetz (23) zweite Kanäle mit einem Querschnitt umfasst, der sich von der zweiten Eingangsfläche (9) zu der zweiten Ausgangsfläche (10) kontinuierlich abnehmend ändert.

**2.** Wärmetauscher (1) nach Anspruch 1, wobei der Tauscherkörper (2) eine erste Einlasswand (71) umfasst, die ein Eindringen des ersten Fluids durch die erste Einlassfläche (7) in das erste Kanalnetz (22) gestattet und ein Eindringen des ersten Fluids durch die erste Einlassfläche (7) in das zweite Kanalnetz (23) unterbindet.

**3.** Wärmetauscher (1) nach Anspruch 2, umfassend einen ersten Einlassverteiler (3), um das erste Fluid bis zu der ersten Einlasswand (71) zuzuführen.

**4.** Wärmetauscher (1) nach einem der Ansprüche 1 bis **3,** wobei der Tauscherkörper (2) eine erste Auslasswand (81) umfasst, die eine Entnahme des ersten Fluids durch die erste Auslassfläche (8) aus dem ersten Kanalnetz (22) gestattet und eine Entnahme des zweiten Fluids durch die erste Auslassfläche (8) aus dem zweiten Kanalnetz (23) unterbindet.

**5.** Wärmetauscher (1) nach Anspruch 4, umfassend einen ersten Auslassverteiler (4), um das erste Fluid durch die erste Auslasswand (81) zu entnehmen.

**6.** Wärmetauscher (1) nach einem der Ansprüche 1 bis 5, wobei der Tauscherkörper (2) eine zweite Einlasswand (91) umfasst, die ein Eindringen des zweiten Fluids durch die zweite Einlassfläche (9) in das zweite Kanalnetz (23) gestattet und ein Eindringen des zweiten Fluids durch die zweite Einlassfläche (9) in das zweite Kanalnetz (23) unterbindet.

7. Wärmetauscher nach Anspruch **6,** umfassend einen zweiten Einlassverteiler (5), um das zweite Fluid durch die zweite Einlasswand (91) zuzuführen.

8. Wärmetauscher nach einem der Ansprüche 1 bis **7,** wobei der Tauscherkörper (2) eine zweite Auslasswand (101) umfasst, die eine Entnahme des zweiten Fluids durch die zweite Auslassfläche (10) aus dem zweiten Kanalnetz (23) gestattet und eine Entnahme des ersten Fluids durch die zweite Auslassfläche (10) aus dem ersten Kanalnetz (23) unterbindet.

9. Wärmetauscher nach Anspruch **8,** umfassend einen zweiten Auslassverteiler (6), um das zweite Fluid durch die zweite Auslasswand (10) zu entnehmen.

10. Wärmetauscheranordnung (13), umfassend eine Vielzahl von Wärmetauschern (1A-1D) nach einem der Ansprüche 1 bis 9, einschließlich eines ersten Wärmetauschers (1A) und eines zweiten Wärmetauschers (1B), wobei die erste Auslassfläche (8) des ersten Wärmetauschers (1A) mit der ersten Einlassfläche (7) des zweiten Wärmetauschers (1B) verbunden ist, so dass das erste Fluid nacheinander durch den ersten Wärmetauscher (1A) und durch den zweiten Wärmetauscher (1B) strömt, und wobei die zweite Auslassfläche (10) des zweiten Wärmetauschers (1B) mit der zweiten Einlassfläche (9) des ersten Wärmetauschers (1A) verbunden ist, so dass das zweite Fluid nacheinander durch den zweiten Wärmetauscher (1B) und durch den ersten Wärmetauscher (1A) strömt.

**Claims**

1. Heat exchanger (1) comprising an exchanger body (2) delimited by a first inlet surface (7), a first outlet surface (8), a second inlet surface (9) and a second outlet surface (10), the exchanger body (2) comprising a gyroid-shaped separating wall (21) separating a first network of channels (22) for the circulation of a first fluid from the first inlet surface (7) to the first outlet surface (8), and a second network of channels (23) for the circulation of a second fluid from the second inlet surface (9) to the second outlet surface (10), **characterized in that** the first network of channels (22) comprises first channels having a cross-section which varies by continuously increasing from the first inlet surface (7) to the first outlet surface (8), and **in that** the second channel network (23) comprises second channels having a cross-section which varies by continuously decreasing from the second inlet surface (9) to the second outlet surface (10).

2. Heat exchanger (1) according to claim 1, wherein the exchanger body (2) comprises a first inlet wall (71) allowing penetration of the first fluid through the first inlet surface (7) into the first channel network (22) and preventing penetration of the first fluid through the first inlet surface (7) into the second channel network (23).

3. Heat exchanger (1) according to claim 2, comprising a first inlet manifold (3) for feeding the first fluid to the first inlet wall (71).

4. Heat exchanger (1) according to one of claims 1 to 3, wherein the exchanger body (2) comprises a first outlet wall (81) allowing extraction of the first fluid through the first outlet surface (8) out of the first channel network (22) and preventing extraction of the second fluid through the first outlet surface (8) out of the second channel network (23).

5. Heat exchanger (1) according to claim 4, comprising a first outlet manifold (4) for extracting the first fluid through the first outlet wall (81).

6. Heat exchanger (1) according to one of claims 1 to 5, wherein the exchanger body (2) comprises a second inlet wall (91) allowing penetration of the second fluid through the second inlet surface (9) into the second channel network (23) and preventing penetration of the second fluid through the second inlet surface (9) into the second channel network (23).

7. Heat exchanger according to claim 6, comprising a second inlet manifold (5) for feeding the second fluid through the second inlet wall (91).

8. Heat exchanger according to one of claims 1 to 7, wherein the exchanger body (2) comprises a second outlet wall (101) allowing extraction of the second fluid through the second outlet surface (10) out of the second channel network (23) and preventing extraction of the first fluid through the second outlet surface (10) out of the first channel network (23).

9. Heat exchanger according to claim 8, comprising a second outlet manifold (6) for extracting the second fluid through the second outlet wall (10).

10. Heat exchanger assembly (13) comprising a plurality of heat exchangers (1A-1 D) according to one of claims 1 to 9, including a first heat exchanger (1A) and a second heat exchanger (1B), wherein the first outlet surface (8) of the first heat exchanger (1A) is connected to the first inlet surface (7) of the second heat exchanger (1B) so that the first fluid flows successively through the first heat exchanger (1A) and through the second heat exchanger (1B), and wherein the second outlet surface (10) of the second heat exchanger (1B) is connected to the second inlet surface (9) of the first heat exchanger (1A) so that the second fluid flows successively through the second heat exchanger (1B) and through the first heat exchanger (1A).

Fig. 1

**Fig. 2**

Fig. 3

**Fig. 4**

Fig. 5

**Fig. 6**

**Fig. 7**

**Fig. 8**

**Fig. 9**

**Fig. 10**

**Fig. 11**

Fig. 12

Fig. 13

**Fig. 14**

**Fig. 15**

Fig. 16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018306516 A1

- US 2020033070 A1